# EUROPEAN PATENT SPECIFICATION

(11) **EP 0 292 262 B1**
(45) Date of publication and mention of the grant of the patent: **07.04.1993**
(21) Application number: 88304501.5
(22) Date of filing: 18.05.1988
(51) Int. Cl.: C09D 133/00, C08J 3/11

(54) **Coating composition**
Überzugszusammensetzung
Composition de revêtement

(30) Priority: 20.05.1987 JP 121310/87
(43) Date of publication of application: 23.11.1988
(73) Proprietor: KANSEI PAINT CO., LTD., Amagasaki-shi Hyogo-ken (JP)
(72) Inventor: Yabuta, Motoshi c/o Gijutsuhonbu, Hiratsuka-shi Kanagawa-ken (JP); Hiramatsu, Yasuhiro c/o Gijutsuhonbu, Hiratsuka-shi Kanagawa-ken (JP); Kasari, Akira c/o Gijutsuhonbu, Hiratsuka-shi Kanagawa-ken (JP)
(74) Representative: Myerscough, Philip Boyd

(56) References cited:
- EP-A- 0 191 629
- US-A- 4 616 058

## Description

This invention relates to a coating composition, and more specifically to a coating composition comprising dispersed fine particles of a film-forming polymer dispersed stably in an organic liquid.

Attempts have recently been made in the field of coating technology to provide high-solids paints, powder paints and water-based paints in order to reduce pollution and save resources. Particularly, in the development of high-solids paints, it is essential to use components having a low glass transition temperature or components having a low molecular weight as a resin vehicle and a curing agent which are the main paint components if one wants to maintain a high solids content during the coating operation.

Such a high-solids paint, however, gives rise to troubles in the coating operation. For example, when a thick film is formed from it, it may sag during coating, and in metallic coating, metallic pigment flakes are not oriented well in the paint. Furthermore, coated films formed from it may have reduced weatherability, solvent resistance and hardness.

As a means of solving these problems, the applicant previously proposed incorporation of dispersed fine particles of a film-forming polymer (a so-called "non-aqueous polymer dispersion" to be sometimes abbreviated as "NAD") stabilized by a dispersion stabilizer in a solvent-base acrylic resin paint (see Japanese Laid-Open Patent publication No. 25401/1980 and Japanese Patent Publication No. 33032/1984). If the proportion of the NAD particles in the above NAD/solvent-base acrylic paint is increased, the viscosity of the paint system decreases accordingly, and a paint having a high solids concentration at the time of coating can be designed. The NAD particles incorporated in the conventional method are dispersed uniformly as spherical particles in the coated film and behave in the same way as a pigment in the coated film. Hence, they exerts a particle reinforcing effect (particle filling effect) and increase the Young's modulus and rigidity of the coated film. Furthermore, since the NAD particles form a coated film of a non-uniform structure as do ABS resin and high-impact polystyrene resin known as impact resistant resins, they can impart excellent ability to relax stresses to the coated film.

However, the effects of the NAD particles on the properties of the coated film are not necessarily greater as the content of the NAD particles is higher. The highest content of the NAD particles in the paint is about 30 % by weight based on the resin solids (the same basis hereinafter), and if the NAD particles are included in a larger amount, the resulting coated film becomes hard and brittle. For practical purposes, therefore, the content of the NAD particles in the paint is usually limited to about 30 % by weight at the highest. Accordingly, there is naturally a limit to the maximization of the solids concentration of the paint at the time of coating.

In order to solve the above problems, the present inventors made extensive investigations on a coating composition which can maintain a highest possible NAD content above 30 % by weight when it is in the form of a paint and can provide a residual NAD content of about 30 % by weight when it is in the form of a coated film. These investigations have led to the present invention.

According to this invention, there is provided a coating composition comprising;
(i) dispersed fine particles of diameter 0.05 to 2 µm comprising a film-forming polymer of units derived from at least one radical-polymerizable unsaturated monomer selected from (meth)acrylic acid esters, vinyl aromatic compounds, α,β-ethylenically unsaturated acids, (meth)acrylic acid amides, (meth)acrylonitrile, vinyl acetate, vinyl propionate, vinyl pivalate, isocyanatoethyl methacrylate, perfluorocyclohexyl (meth)acrylate, p-styrene sulphonamide, N-methyl-p-styrene sulphonamide and gamma-methacryloxypropyltri-methoxysilane, said particles being a mixture of (A) non-gelled dispersed fine particles having a number average molecular weight of 5,000 to 100,000, and (B) gelled dispersed fine particles which are internally crosslinked, wherein the weight ratio of (A) to (B) as solids is 98:2 to 20:80;
(ii) an organic liquid comprising (C) a high-boiling organic liquid having a boiling point of at least 150°C which is a solvent for said particles (A) but a non-solvent for said particles (B), and (D) a low-boiling organic liquid having a boiling point of 70 to 150°C which is a non-solvent for both fine particles (A) and (B), wherein the organic liquids (C) and (D) are in a weight ratio of 10:90 to 40:60, and the organic liquid (C) is in amount of 20 to 250 parts by weight per 100 parts by weight of the film-forming polymer component; and
(iii) a polymeric dispersion stabilizer soluble in said organic liquid.

The invention also provides an article coated with the above coating composition.

The polymeric dispersion stabilizer which is used to stabilize the non-gelled dispersed fine particles (A) [to be referred to as the "particles (A)" hereinafter] and the gelled dispersed fine particles (B) [to be referred to as the "particles B" hereinafter] in the organic liquid may be any of those generally used heretofore in the field of NAD. Examples are given below.
(i) Polyester macromers obtained by introducing about 1.0 polymerizable double bond into the molecules of self-condensed polyesters of hydroxyl-containing fatty acids such as 12-hydroxystearic acid [for example, poly(12-hydroxystearic acid)] by addition-reaction of glycidyl (meth)acrylate with the carboxyl groups of the polyesters.
(ii) Polyester/acrylic monomer-grafted comb-like polymers obtained by copolymerizing the above polyester macromers, methyl methacrylate and glycidyl methacrylate in a ratio of 50:49:2 and introducing a polymerizable double bond by addition-reaction with (meth)acrylic acid.
(iii) Acrylic copolymers containing as a main component long-chain unsaturated monomers for example higher (preferably C₄-C₁₈) alkyl esters of (meth)acrylic acid such as octyl (meth)acrylate, 2-ethylhexyl (meth)acrylic acid, lauryl (meth)acrylate, lauryl (meth)acrylate and stearyl (meth)acrylate.
(iv) Acrylic copolymers obtained by addition-reaction of acrylic copolymers obtained by copolymerizing the monomer components of the acrylic copolymers (iii) and (meth)acrylic acid or hydroxyalkyl (meth)acrylates, for example C₂-C₄ hydroxyalkyl (meth)acrylates such as hydroxyethyl (meth)acrylate or hydroxypropyl (meth)acrylate, with glycidyl (meth)acrylate or a vinyl monomer containing an isocyanate group such as isocyanatoethyl methacrylate or alpha,alpha-dimethyl-meta-isopropenylbenzyl isocyanate to introduce about 1.0 polymerizable double bond on an average.
(v) Alkylated melamine-formaldehyde resin having a high mineral spirit tolerance.

Dispersion stabilizers especially suitably used in this invention are those which are soluble in solvents having relatively low polarity such as aliphatic hydrocarbons and can meet the requirements regarding the properties of coated films to some extent. The above acrylic copolymers (iii) and (iv) can be advantageously used as such stabilizers because they permit easy adjustment of their molecular weights, glass transition temperatures, polarities (SP values), hydroxyl values and acid values. Especially preferred are those acrylic copolymers which have 1.0 polymerizable double bond on an average which can be grafted to the dispersed fine particles.

The dispersed fine particles of the film-forming polymer as an essential component of the coating composition of this invention are a mixture of the particles (A) and the particles (B). Usually, the particles (A) and the particles (B) are prepared separately by the procedure described below and then mixed.

The particles (A) can be prepared by a known method, for example by polymerizing at least one unsaturated monomer forming the particles (A) in an organic solvent composed mainly of an aliphatic hydrocarbon which dissolves the unsaturated monomer and the dispersion stabilizer but does not substantially dissolve the polymer formed from the unsaturated monomer, in the presence of the dispersion stabilizer. The resulting particles (A) is present in the stably dispersed state in the coating composition. After it has been coated and changed to a coated film, the particles (A) should be swollen and dissolved by the high-boiling good solvent to form a continuous phase. However, since the dispersion stabilizer and the dispersed fine particle-forming polymer are substantially different in polarity, the dispersion stabilizer and the dispersed fine particle-forming polymer gather to form two layers and thus frequently bring about a deterioration in the transparency, smoothness and gloss of the coated film. To avoid this layer separation surely, it is necessary to bond the dispersion stabilizer and the dispersed fine particle-forming polymer chemically by grafting. The degree of grafting of the dispersion stabilizer may vary depending upon the use and function of the resulting coating composition, and is at least 20 % by weight, preferably 40 to 70 % by weight, in terms of the grafting efficiency. It does not always have to be 100 % by weight.

To maintain particles (A) in the dispersed state in the coating composition and after coating, the particles should be rapidly swollen and dissolved by the solvent (C) in the coated film, and therefore the number average molecular weight of the film-forming polymer constituting particles (A) is in the relatively low range of 5,000 to 100,000, preferably 10,000 to 70,000.

The particles (B), on the other hand, can be prepared by the same method as the preparation of the particles (A) except that the dispersed fine particles are internally crosslinked. The dispersion stabilizer may be different from that used in the preparation of the particles (A) if it is compatible with the one used for the latter. However, advantageously, the same dispersion stabilizer is used to prepare the particles (A) and (B) from the viewpoint of compatibility.

Internal crosslinking of the particles (B) may be carried out, for example, by (1) reacting the unsaturated monomer forming the particles (B) with at least two vinyl monomers having complementary functional groups which can be reacted with each other and bonded, or (2) copolymerizing the unsaturated monomer with a polyvinyl monomer such as divinylbenzene or ethylene glycol dimethacrylate.

In method (1), combinations of the complementary functional groups which can be reacted with each other and bonded are, for example,
(i) an epoxy group/a carboxyl group
(ii) a hydroxyl group/an isocyanate group
(iii) an epoxy group/an amino group
(iv) an isocyanate group/an amino group.

Examples of (i) include combinations of epoxy group-containing monomers such as glycidyl acrylate and glycidyl methacrylate and carboxyl group-containing monomers such as acrylic acid and methacrylic acid. Examples of (ii) include combinations of hydroxyl group-containing monomers such as hydroxyethyl acrylate and hydroxyethyl methacrylate and isocyanate group-containing monomers such as isocyanatoethyl acrylate, isocyanatoethyl methacrylate, alpha,alpha-dimethyl-meta-isopropenyl-benzyl isocyanate or an equal amount adduct of isophorone diisocyanate/hydroxyethyl (meth)acrylate. Examples of (iii) are combinations of the epoxy group-containing monomers and aminoalkyl acrylates or methacrylates. Examples of (iv) include combinations of the isocyanate group-containing monomers and the aminoalkyl (meth)acrylates.

Alternatively, the particles (B) may be crosslinked by copolymerizing the aforesaid unsaturated monomer with a monomer having a self-crosslinkable functional monomer such as N-butoxymethylated acrylamide and gamma-methacryloxypropyltrimethoxysilane.

Each of the two or more vinyl monomers having the complementary functional groups may be present in a concentration of at least 0.5 % by weight, preferably 0.5 to 20 % by weight, in the monomeric mixture. The polyvinyl monomer may also be present in a concentration of at least 0.5 % by weight, preferably 0.5 to 10 % by weight, in the monomeric mixture. These vinyl monomers serve to crosslink the particles (B), and may be selected depending upon the desired properties of the coating composition. The monomers having complementary functional groups in combination as described in (i) above and the polyvinyl monomers are especially preferred.

The monomers constituting the polymers used as the dispersion stabilizer and the monomers constituting the particles of the film-forming polymer may be any radical-polymerizable unsaturated monomers. Typical examples are shown below.
(a) Acrylic or methacrylic acid esters
   C₁₋₁₈ alkyl acrylates or methacrylates such as methyl acrylate, ethyl acrylate, propyl acrylate, isopropyl acrylate, butyl acrylate, hexyl acrylate, octyl acrylate, lauryl acrylate, stearyl acrylate, methyl methacrylate, ethyl methacrylate, propyl methacrylate, isopropyl methacrylate, butyl methacrylate, hexyl methacrylate, octyl methacrylate and lauryl methacrylate; C₂₋₈ alkenyl acrylates such as allyl acrylate or methacrylate; glycidyl acrylate or methacrylate; C₂₋₈ alkenyl acrylates or methacrylates such as hydroxyethyl methacrylate, hydroxyropyl acrylate and hydroxypropyl methacrylate; and C₃₋₁₈ alkenyloxyalkyl acrylates or methacrylates such as allyloxyethyl acrylate and allyloxymethacrylate.
(b) Vinyl aromatic compounds
   Styrene, alpha-methylstyrene, vinyltoluene, p-chlorostyrene and vinylpyridine.
(c) alpha,beta-Ethylenically unsaturated acids
   Acrylic acid, methacrylic acid and itaconic acid.
(d) Acrylic or methacrylic acid amides
   Acrylamide, methacrylamide, n-butoxymethylacrylamide, n-butoxymethyl methacrylamide and n-methylol methacrylamide.
(e) Other unsaturated monomers
   Acrylonitrile, methacrylonitrile, vinyl acetate, Veoba monomer (a product of Shell Chemical Co.), vinyl propionate, vinylpivalate, isocyanatoethyl methacrylate, perfluorocyclohexyl (meth)acrylate, p-styrene sulfonamide, N-methyl-p-styrene sulfonamide and gamma-methacryloxypropyltrimethoxysilane.

Among the above monomers, monomeric mixtures composed of a relatively long-chain monomer having low polarity, such as n-butyl methacrylate, 2-ethylhexyl methacrylate, dodecyl methacrylate, lauryl methacrylate or stearyl methacrylate, as a main component and as required, styrene 2-hydroxyethyl (meth)acrylate or methacrylic acid are preferably used in the preparation of the acrylic copolymer as the dispersion stabilizer. The dispersion stabilizer may be obtained by copolymerizing the monomeric mixture and introducing a polymerizable double bond into the copolymer after addition-reaction of glcidyl (meth)acrylate or isocyanatoethyl methacrylate.

The film-forming polymer constituting the dispersed fine particles is preferably an acrylic (co)polymer. Suitable monomers for forming the acrylic (co)polymer are the relatively highly polar monomers methyl (meth)acrylate, ethyl methacrylate, n-butyl acrylate and acrylonitrile as a main component, optionally in combination with (meth)acrylic acid or 2-hydroxyethyl (meth)acrylate.

In the preparation of particles (A) and (B), the weight ratio of the dispersion stabilizer to the unsaturated monomers is generally from 5:95 to 80:20, preferably from 10:90 to 60:40, more preferably from 20:80 to 50:50.

The polymerization for preparing the dispersion stabilizer and the particles using the unsaturated monomers may be carried out by a known radical polymerization method using a radical polymerization initiator. Examples of the initiator include azo initiators such as 2,2-azoisobutyronitrile and 2,2'-azobis(2,4-dimethylvaleronitrile), and peroxide initiators such as benzoyl peroxide, lauryl peroxide and tert-butyl peroctoate. The polymerization initiator may be used in an amount of generally 0.5 to 10 parts by weight, preferably 0.3 to 3 parts by weight, per 100 parts by weight of the monomeric mixture to be polymerized.

The resulting particles (A) and (B) each have an average particle diameter of 0.05 to 2 micrometers, and preferably 0.1 to 0.7 micrometer in view of their stability in the coating composition, the solvent sensitivity of the dispersed fine particles (A), and the gloss, smoothness and weatherability of the resulting coated film.

The dispersed fine particles of the film-forming polymer used in this invention is obtained by mixing the particles (A) and (B). The mixing ratio of particles (A) and particles (B) is from 98:2 to 20:80, preferably from 95:5 to 40:60, more preferably from 90:10 to 50:50, by weight as solids. If the component (A) is larger than 98 and the component (B) is less than 2, the particles (B) present in the cured coated film finally obtained tends to be difficult of exerting the particle reinforcing effect, or the stress relaxing effect. On the other hand, if the component (A) is smaller than 20 and the component (B) is larger than 80, the coating composition has too small a proportion of a swellable and soluble component and the coating operability becomes inferior. Another problem is that a large amount of the crosslinked particles remain in the coated film to degrade its properties.

Now, the organic liquid used in the present invention will be described. The organic liquid used in this invention is a mixture of a high-boiling organic liquid (C) which has a boiling point of at least 150 °C, preferably at least 180 °C, and is a solvent for the particles (A) and the dispersion stabilizer but a non-solvent (poor solvent) for the fine particles (B) and a relatively low-boiling organic liquid (D) which has a boiling point of 70 to 150 °C, more preferably 90 to 150 °C and is a non-solvent (poor solvent) for the fine particles (A) and (B).

The mixing ratio between the high-boiling organic liquid (C) and the low-boiling organic liquid (D) is from 10:90 to 40:60 by weight. The amount of the high-boiling organic liquid (C) used is critical. It is such an amount that the dispersed fine particles in the liquid coating composition are not dissolved or flocculated but can be swollen and dissolved when it is in a coated film formed from the coating composition. Specifically, the amount of the high-boiling organic liquid (C) is 20 to 250 PHR, more preferably from 30 to 100 PHR (PHR denotes parts by weight per 100 parts by weight of the film-forming resin component).

If the amount of the high-boiling solvent is less than 20 PHR the particles (A) are only partly swollen and cannot fully perform their inherent function. If its amount is too large, the particles (A) still in the coating composition are liable to be swollen or dissolved and consequently to flocculate, sediment and thicken.

Examples of the high-boiling organic liquid (C) having a boiling point of at least 150 °C include esters such as n-butyl lactate, ethyl benzoate, ethylene glycol di-acetate, carbitol acetate, Cellosolve acetate, 2-(2-butoxyethoxy)ethyl acetate and cyclohexyl acetate; ketones such as cyclohexanone, isophorone, methoxyhexanone and methyl cyclohexanone; alcohols such as 3,3,5-trimethylhexanol and benzyl alcohol; ethers such as diethylene glycol diethyl ether, ethylene glycol di-n-butyl ether and diethylene glycol di-n-butyl ether; ether alcohols such as 2-butoxyethanol; dimethylformamide; and esters between aliphatic alcohols having 4 or 5 carbon atoms or aromatic alcohols and phthalic or adipic acid (plasticizers). Carbitol acetate, cyclohexanone and benzyl alcohol are preferably used in practical applications.

Examples of the low-boiling organic liquid (D) having a boiling point of 70 to 150 °C include aliphatic or alicyclic hydrocarbons such as hexane, heptane, octane and cyclohexane; naphthas such as VMP naphtha and petroleum naphtha; alcohols such as propanol and butanol; aromatic hydrocarbons such as toluene and xylene; and mixtures of two or more of these. Heptane, cyclohexane, butanol and toluene are preferred.

It should be understood that the definitions of the organic liquids (C) and (D) are not strict, and may vary depending upon, for example, the polarity and molecular weight of the polymer forming the fine particles (A).

It is generally desirable to select the organic liquids (C) and (D) such that there is a difference of at least 5 °C, preferably 10 to 20 °C, between their boiling points.

The coating composition of this invention is a low-viscosity high solid composition which can be produced by adjusting the ratio of the high-boiling and the low-boiling organic liquids (C) and (D) to the above specified range in dispersed fine particles of the film-forming polymer comprising particles (A) and (B) The solids concentration of the coating composition at the time of coating may be adjusted generally to 20 to 60 % by weight, preferably 20 to 40 % by weight.

The coating composition may be used directly. As required, another film-forming polymer in solution may be added to the composition. It is also possible to add an amino resin such as melamine-formaldehyde resin and urea-formaldehyde resin, an epoxy resin or a polyisocyanate as a curing agent to form a room temperature-curable or heat-curable coating composition. Naturally, it is necessary in this case to include functional groups capable of reacting with the functional groups of the curing agent into the dispersion stabilizer and/or the dispersed fine particles.

Furthermore, the coating composition of this invention may optionally contain additives, for example a pigment component such as organic pigments, inorganic pigments, fillers and metallic flaky pigments, an anti-oxidant, an ultraviolet absorber and a rust-proofing agent.

In a metallic paint containing a flaky pigment such as aluminum, copper or mica, the flaky pigment can be effectively fixed and oriented at the time of coating and produces a very great metallic effect.

When the coating composition of this invention is coated by ordinary coating means such as spray-coating, the low-boiling non-solvent (D) for the particles (A) volatilizes from the coated film and the high-boiling (polar) solvent (C) remains in the concentrated state in the coated film to swell and dissolve the particles (A). As a result, only the internally crosslinked dispersed particles (B) alone as NAD particles are present as nearly the same spheres in a concentration of about 30 % by weight in the coated film. The particles (B) exert a particle reinforcing effect on the coated film and serve to increase the Young's modulus and rigidity of the coated film.

Furthermore, while the solvent (C) remaining in the coated film is swelling and dissolving the particles (A), the highly polar polymer having a relatively high molecular weight and a high glass transition temperature changes from particles to a solution, and the viscosity of the coated film increases markedly. Accordingly, in a metallic finish paint containing a metallic flaky pigment, the flaky pigment is effectively oriented and fixed and a good metallic finish free from metallic unevenness can be achieved.

The following Examples and Comparative Examples illustrate the present invention specifically. In these Examples, all parts and percentages are by weight.

### EXAMPLE 1

### Production of an acrylic copolymer solution (1)

In a reactor, 100 parts of xylene was heated to 130 °C, and a mixture of the following monomers and polymerization initiator was added dropwise over 3 hours. After the addition, the mixture was aged for 2 hours.

| | |
|---|---|
| 2-Ethylhexyl methacrylate | 45 parts |
| Lauryl methacrylate | 33 parts |
| 2-Hydroxyethyl methacrylate | 15 parts |
| Methacrylic acid | 7 parts |
| 2,2-Azoisobutyronitrile | 2 parts |

An acrylic resin varnish having a solids content of 50 % and a weight average molecular weight of 15,000 was obtained.

### Production of a dispersion stabilizer (1)

The following compounds,

| | |
|---|---|
| glycidyl methacrylate | 1 part, |
| 4-tert-butyl pyrocatechol | 0.02 part, |
| and | |
| dimethylaminoethanol | 0.1 part, |

were added to 202 parts of the acrylic resin varnish obtained as above, and the mixture was stirred at 130 °C for 5 hours to introduce copolymerizable double bonds into the molecules. The number of the double bonds introduced was about 1.0 per molecular chain on the basis of the number average molecular weight by measurement of the resin acid value.

| Production of non-gelled fine particle dispersion (A-1) | |
|---|---|
| Dispersion stabilizer (1) (50 % solids) | 100 parts |
| Heptane | 100 parts |

The above materials were charged into a flask, and at the refluxing temperature, the following monomers and polymerization initiator were added dropwise over 4 hours.

| | |
|---|---|
| Styrene | 10 parts |
| Methyl methacrylate | 45 parts |
| n-Butyl acrylate | 20 parts |
| Acrylonitrile | 10 parts |
| 2-Hydroxyethyl methacrylate | 15 parts |
| 2,2-Azobisisobutyronitrile | 2 parts |

The mixture was aged for 2 hours. Under reduced pressure, 50 parts of heptane was recovered to concentrate the reaction mixture. The reaction product was a milk-white dispersion having a solids content of 60 %. The dispersed particles in it had a particle diameter of about 200 nm as a peak diameter. The particle diameter was measured by a quasi-elastic light scattering method using COULTER Model N-4 supplied by Coulter Counter Company. Hereinafter, the particle diameters were measured substantially by the same method.

| Production of a gelled fine particle dispersion (B-1) | |
|---|---|
| Dispersion stabilizer (1) (50% solids) | 50 parts |
| Heptane | 100 parts |

To these materials were added dropwise the following monomers and polymerization initiator at the refluxing temperature over 4 hours.

| | |
|---|---|
| Styrene | 10 parts |
| Methyl methacrylate | 76 parts |
| Acrylonitrile | 10 parts |
| Glycidyl methacrylate | 2 parts |
| Methacrylic acid | 2 parts |
| 2,2-Azoisobutyronitrile | 1.5 parts |
| Dimethylaminoethanol | 0.1 part |

Under reduced pressure, 50 parts of heptane was recovered under reduced pressure to concentrate the reaction mixture. The reaction product was a milk-white dispersion having a solids content of 60 %. The dispersed particles in it had a peak particle diameter of bout 270 nm.

| Preparation of a coating composition | |
|---|---|
| 60 % fine particle dispersion (A-1) | 50 parts |
| 60 % fine particle dispersion (B-1) | 50 parts |
| 50 % acrylic copolymer solution (1) | 20 parts |
| 70% Uban 20HS (*1) | 42.9 parts |
| 1 % Raybo No. 2 (*2) | 0.1 part |

| | |
|---|---|
| (*1): melamine resin produced by Mitsui Toatsu Chemicals, Inc. | |
| (*2): silicone additive produced by Raybo Chemical Co. | |

The above ingredients were fully stirred and mixed, and then 50 parts (50 PHR) of carbitol acetate was added to form a coating composition in accordance with this invention. The composition had a viscosity of 35 % (Ford cupt #4/20 °C) and at the time of spray coating, a solids content of about 47 %.

The composition was spray-coated on a tin plate, and after standing for 20 minutes, baked at 150 °C for 20 minutes to form a coated cured film having a thickness of about 35 microns, excellent gloss and transparency, and a gel fraction (determined by an acetone extraction method) of 96. The coated film was immersed overnight in a 1 % aqueous solution of osmium oxide to dye it, and a microtome slice having a thickness of about 400 Å was prepared. Using this slice, the dispersed particles in the coated film were observed under a transmission-type electron microscope. The dispersed particles (B-1) were uniformly dispersed in the coated film as spherical particles having a particle diameter of about 260 nm. Some of the dispersed fine particles (A-1) remained as ultrafine particles with a slightly distorted spherical shape having a size of not more than 0.05 micron. Most of the dispersed particles (A-1) were dissolved and formed a continuous phase.

The volume fraction of the particles in the coated film, determined by image processing of the electron micrograph of the coated film, was about 27 %.

### EXAMPLE 2

### Production of a gelled fine particle dispersion (B-2)

12-Hydroxystearic acid was dehydrocondensed under refluxing of toluene using methanesulfonic acid as a catalyst to a resin acid value of 30. The terminal carboxyl groups of the resulting self-condensed polyester having a number average molecular weight of about 1,800 were reacted with glycidyl methacrylate using dimethylaminoethanol as a catalyst to give a polyester macromer having polymerizable double bonds introduded thereinto (dispersion stabilizer).

Heptane (141 parts) was put in a flask and heated under reflux. A mixture of the following compounds

| | |
|---|---|
| methyl methacrylate | 76.8 parts |
| glycidyl methacrylate | 1.6 parts |
| acrylic acid | 1.6 parts |
| polyester macromer as 70 % toluene solution | 28.6 parts |
| dimethylaminoethanol | 0.1 part |
| 2,2-azoisobutyronitrile | 1.5 parts |

was added dropwise at a uniform rate over the course of 5 hours. The mixture was then aged for 2 hours. The resulting dispersion comprised particles having a particle diameter of about 290 nm and stabilized by grafting of the polyester macromer.

| Preparation of a coating composition | |
|---|---|
| 60 % fine particle dispersion (A-1) | 66.6 parts |
| 40 % fine particle dispersion (B-2) | 50.0 parts |
| 60 % acrylic copolymer solution (*3) | 33.3 parts |
| 60 % Melan #28 (*4) | 33.3 parts |
| Aluminum paste (*5) | 12.0 parts |
| Organic yellow pigment (*6) | 0.01 part |
| Carbon black (*7) | 0.005 part |

| | |
|---|---|
| (*3) Acrylic copolymer having a weight average molecular weight of 9,000 and a solids content of 60 % (as a xylene solution) obtained by copolymerizing 12 parts of hydroxyethyl acrylate, 25 parts of methyl methacrylate, 20 parts of n-butyl acrylate, 36 parts of 2-ethylhexyl acrylate and 3 parts of acrylic acid. | |
| (*4): Melamine resin produced by Hitachi Chemical Co., Ltd. | |
| (*5): Alumi Paste #4919 produced by Toyo Aluminum Co., Ltd. | |
| (*6): Irgazine Yellow 3RLTN produced by Ciba-Geigy | |
| (*7): Neo Spectra Beads AG produced by Columbia Carbon Company. | |

The above ingredients were fully mixed and stirred (the pigment was blended as a dispersed paste using an acrylic copolymer). Then, a mixture of 50 parts (50 PHR) of Cellosolve acetate, 45.9 parts of toluene and 20.0 parts of butanol was added to prepare a metallic paint having a viscosity (Ford cup #4/20 °C) of 14 seconds. The paint had a solids content of about 36 % at the time of coating, which was high for metallic paints.

The resulting metallic paint was coated in two portions to a thickness of about 18 microns on a steel plate to which a cationic electrodeposition paint and an intermediate paint had been applied. After standing for 4 minutes, the clear paint obtained in Example 1 was coated over the metallic coat to a thickness of about 35 microns and then the coated steel sheet was left to stand at room temperature for 9 minutes, and subsequently maintained in a hot air electric oven at 140 °C for 30 minutes to cure the applied paints.

The resulting coated film had good gloss, smoothness and metallic feel and was free from metallic non-uniformity. Particularly, there was no non-uniformity of the metallic flaky pigment owing to reflowing nor the lack of gloss in the clear coated film by layer mixing beween the two layers, and the coating operability was excellent.

### COMPARATIVE EXAMPLE 1

A coating composition was prepared, and tested in the same way as in Example 1 except that in the paint formulation, 50 parts of butyl Cellosolve incapable of dissolving the dispersed fine particles (A-1) was used instead of 50 parts of carbitol acetate.

Observation of the particles in the coated film under an electron microscope showed that the dispersed fine particles (A-1) remained as they had been, and the total volume fraction of the dispersed fine particles (A-1) and (B-1) was about 42 %, and the coated film had a high particle content and was of a non-uniform structure. The resulting coated film had degraded properties and was hard and brittle with a break elongation of about 3 %.

### COMPARATIVE EXAMPLE 2

A metallic paint was prepared, and tested, in the same way as in Example 2 except that 66.6 parts of the fine particle dispersion (B-1) was used instead of 66.6 parts of the fine particle dispersion (A-1) in the metallic paint formulation in Example 2.

At the time of coating the metallic paint, fixing of the metallic flaky paint was insufficient, and the resulting coated film had marked non-uniformity in the metallic pigment. The metallic pigment non-uniformity increased further on coating a clear paint, and the resulting coated film lacked a lusterous feel.

## Claims

1. A coating composition comprising;
(i) dispersed fine particles of diameter 0.05 to 2 µm comprising a film-forming polymer of units derived from at least one radical-polymerizable unsaturated monomer selected from (meth)acrylic acid esters, vinyl aromatic compounds, α,β-ethylenically unsaturated acids, (meth)acrylic acid amides, (meth)acrylonitrile, vinyl acetate, vinyl propionate, vinyl pivalate, isocyanatoethyl methacrylate, perfluorocyclohexyl (meth)acrylate, p-styrene sulphonamide, N-methyl-p-styrene sulphonamide and gamma-methacryloxypropyltri-methoxysilane, said particles being a mixture of (A) non-gelled dispersed fine particles having a number average molecular weight of 5,000 to 100,000, and (B) gelled dispersed fine particles which are internally crosslinked, wherein the weight ratio of (A) to (B) as solids is 98:2 to 20:80;
(ii) an organic liquid comprising (C) a high-boiling organic liquid having a boiling point of at least 150°C which is a solvent for said particles (A) but a non-solvent for said particles (B), and (D) a low-boiling organic liquid having a boiling point of 70 to 150°C which is a non-solvent for both fine particles (A) and (B), wherein the organic liquids (C) and (D) are in a weight ratio of 10:90 to 40:60, and the organic liquid (C) is in amount of 20 to 250 parts by weight per 100 parts by weight of the film-forming polymer component; and
(iii) a polymeric dispersion stabilizer soluble in said organic liquid.

2. A composition according to claim 1 wherein the polymeric dispersion stabilizer is an acrylic copolymer.

3. A composition according to claim 2 wherein the acrylic copolymer is an acrylic copolymer having an average of one polymerizable double bond in the molecule, said polymerizable double bond being able to be grafted to the dispersed fine particles.

4. A composition according to claim 1, 2 or 3 wherein the film-forming polymer is an acrylic polymer or copolymer.

5. A composition according to any one of the preceding claims wherein the solids weight ratio of (A) to (B) is from 95:5 to 50:50.

6. A composition according to any one of the preceding claims wherein the high-boiling organic liquid (C) has a boiling point of at least 180°C.

7. A composition according to any one of the preceding claims wherein the high-boiling organic liquid (C) is diethylene glycol monoethyl ether acetate (carbitol acetate), cyclohexanone or benzyl alcohol.

8. A composition according to any one of the preceding claims wherein the low-boiling organic liquid (D) is heptane, cyclohexane, butanol or toluene.

9. An article coated with a coating composition as claimed in any one of the preceding claims.

## Patentansprüche

1. Überzugsmasse, umfassend:
(i) dispergierte feine Teilchen mit einem Durchmesser von 0,05 bis 2 µm, umfassend ein filmbildendes Polymer aus Einheiten, die abgeleitet sind von mindestens einem radikalisch polymerisierbaren ungesättigten Monomer, ausgewählt aus (Meth)acrylsäureestern, vinylaromatischen Verbindungen, α,β-ethylenisch ungesättigten Säuren, (Meth)acrylsäureamiden, (Meth)acrylnitril, Vinylacetat, Vinylpropionat, Vinylpivalat, Isocyanatoethylmethacrylat, Perfluorcyclohexyl-(meth)acrylat, p-Styrol-sulfonamid, N-Methyl-p-styrol-sulfonamid und γ-Methacryloxypropyltri-methoxysilan, wobei diese Teilchen ein Gemisch sind aus (A) nicht-gelierten dispergierten feinen Teilchen mit einem mittleren zahlenmäßigen Molekulargewicht von 5000 bis 100.000 und (B) gelierten dispergierten feinen Teilchen, die intern vernetzt sind, wobei das Gewichtsverhältnis von (A) zu (B) als Feststoffe 98:2 bis 20:80 beträgt;
(ii) eine organische Flüssigkeit, umfassend (C) eine hoch-siedende organische Flüssigkeit mit einem Siedepunkt von mindestens 150°C, die ein Lösungsmittel für die Teilchen (A) ist, aber ein Nicht-Lösungsmittel für die Teilchen (B), und (D) eine niedrig-siedende organische Flüssigkeit mit einem Siedepunkt von 70 bis 150°C, die ein Nicht-Lösungsmittel sowohl für die feinen Teilchen (A) als auch (B) ist, wobei die organischen Flüssigkeiten (C) und (D) in einem Gewichtverhältnis von 10:90 bis 40:60 vorliegen und die organische Flüssigkeit (C) in einer Menge von 20 bis 250 Gew.-Teilen auf 100 Gew.-Teile der filmbildenden Polymerkomponente vorhanden ist; und
(iii) einen polymeren Dispersionsstabilisator, der in der organischen Flüssigkeit löslich ist.

2. Masse nach Anspruch 1, wobei der polymere Dispersionsstabilisator ein Acrylcopolymer ist.

3. Masse nach Anspruch 2, wobei das Acrylcopolymer ein Acrylcopolymer mit im Mittel einer polymerisierbaren Doppelbindung im Molekül ist, wobei die polymerisierbare Doppelbindung in der Lage ist, auf die dispergierten feinen Teilchen aufgepfropft zu werden.

4. Masse nach Anspruch 1, 2 oder 3, wobei das filmbildende Polymer ein Acrylpolymer oder -copolymer ist.

5. Masse nach einem der vorangehenden Ansprüche, wobei das Gewichtsverhältnis der Feststoffe (A) zu (B) 95:5 bis 50:50 beträgt.

6. Masse nach einem der vorangehenden Ansprüche, wobei die hoch-siedende organische Flüssigkeit (C) einen Siedepunkt von mindestens 180°C aufweist.

7. Masse nach einem der vorangehenden Ansprüche, wobei die hoch-siedende organische Flüssigkeit (C) Diethylenglykol-monoethyletheracetat (Carbitolacetat), Cyclohexanon oder Benzylalkohol ist.

8. Masse nach einem der vorangehenden Ansprüche, wobei die niedrig-siedende organische Flüssigkeit (D) Heptan, Cyclohexan, Butanol oder Toluol ist.

9. Mit einer Überzugsmasse nach einem der vorangehenden Ansprüche überzogener Gegenstand.

## Revendications

1. Composition de revêtement comprenant :
(i) des particules fines dispersées, de diamètre 0,05 à 2 µm, comprenant un polymère filmogène, constitué de motifs provenant d'au moins un monomère insaturé polymérisable par polymérisation radicalaire, choisi parmi les esters de l'acide acrylique ou méthacrylique, les composés aromatiques vinyliques, les acides α,β-éthyléniquement insaturés, les amides de l'acide acrylique ou méthacrylique, l'acrylonitrile ou le méthacrylonitrile, l'acétate de vinyle, le propionate de vinyle, le pivalate de vinyle, le méthacrylate d'isocyanatoéthyle, l'acrylate ou méthacrylate de perfluorocyclohexyle, le p-styrène sulfonamide, le N-méthyl-p-styrène sulfonamide et le gamma-méthacryloxypropyltriméthoxysilane, lesdites particules étant un mélange de (A) des particules fines dispersées, non gélifiées, ayant une masse moléculaire moyenne en nombre de 5000 à 100.000, et de (B) des particules fines dispersées gélifiées, qui sont réticulées intérieurement, le rapport en poids de (A) à (B) étant de 98:2 à 20:80, (A) et (B) étant exprimés en matières solides,
(ii) un liquide organique comprenant (C) un liquide organique à point d'ébullition élevé, ayant un point d'ébullition d'au moins 150°C, qui est un solvant pour lesdites particules (A) et un non-solvant pour lesdites particules (B), et (D) un liquide organique à bas point d'ébullition, ayant un point d'ébullition compris entre 70 et 150°C, qui est un non-solvant à la fois pour les fines particules (A) et pour les fines particules (B), les liquides organiques (C) et (D) étant présents selon un rapport en poids de 10:90 à 40:60, et le liquide organique (C) étant présent en une quantité de 20 à 250 parties en poids pour 100 parties en poids du constituant polymère filmogène, et
(iii) un stabilisant de dispersion, polymère, soluble dans ledit liquide organique.

2. Composition selon la revendication 1, dans laquelle le stabilisant de dispersion, polymère, est un copolymère acrylique.

3. Composition selon la revendication 2, dans laquelle le copolymère acrylique est un copolymère acrylique ayant en moyenne une double liaison polymérisable dans la molécule, ladite double liaison polymérisable étant apte à être greffée sur les particules fines dispersées.

4. Composition selon la revendication 1, 2 ou 3, dans laquelle le polymère filmogène est un polymère ou copolymère acrylique.

5. Composition selon l'une quelconque des revendications précédentes, dans laquelle le rapport en poids de (A) à (B) est de 95:5 à 50:50, (A) et (B) étant exprimés en matières solides.

6. Composition selon l'une quelconque des revendications précédentes, dans laquelle le liquide organique à point d'ébullition élevé (C) a un point d'ébullition d'au moins 180°C.

7. Composition selon l'une quelconque des revendications précédentes, dans laquelle le liquide organique à point d'ébullition élevé (C) est l'acétate d'éther monoéthylique de diéthylène-glycol (acétate de carbitol), la cyclohexanone ou l'alcool benzylique.

8. Composition selon l'une quelconque des revendications précédentes, dans laquelle le liquide organique à bas point d'ébullition (D) est l'heptane, le cyclohexane, le butanol ou le toluène.

9. Article revêtu d'une composition de revêtement telle que revendiquée dans l'une quelconque des revendications précédentes.
